# EUROPEAN PATENT APPLICATION

(11) **EP 4 631 407 A1**
(43) Date of publication of application: **15.10.2025**
(21) Application number: 24174218.8
(22) Date of filing: 03.05.2024
(51) Int. Cl.: A47L 5/24, A47L 5/28, A47L 9/28, A47L 9/32

(54) **DUST COLLECTION EQUIPMENT WITH A STARTING POWER SUPPLY**

(30) Priority: 12.04.2024 CN 202410440907
(71) Applicant: Shenzhen Jieqi Technology Innovation Co., Ltd., Shenzhen Guangdong 518129 (CN)
(72) Inventor: Wu, Zhipeng, Shenzhen, 518100 (CN)
(74) Representative: Plavsa, Olga

(57) **Abstract**

A dust collection equipment with a starting power supply includes a housing, fixedly provided with a negative pressure module therein; a dust cover threaded on one end of the housing, where an input end of the negative pressure module is connected to the dust cover, the one end of the housing is detachable provided with a dust collection cylinder; and a battery housing detachable provided on the housing, the battery housing has a battery pack fixedly provided therein, the battery pack is electrically connected to the negative pressure module, one end of the battery housing is opened with a connection compartment, and the connection compartment is fixedly provided with an interface electrically connected to the battery pack. The dust collection equipment has functions of vacuum cleaner and emergency power supply at the same time, which can reduce purchase of a variety of tools, the acquisition cost is thus reduced.

## Description

### TECHNICAL FIELD

The present application relates to the technical field of dust collection equipments, and in particular to a dust collection equipment with a starting power supply.

### BACKGROUND

Vehicle starting power supply is also known as "vehicle emergency starting power supply". A portable starting power supply that integrates power supply and charging functions may help vehicle start in an emergency of when the vehicle stalled or broke down, and also may charge mobile phones, tablet computers and other digital devices anytime and anywhere. Generally lithium battery cells are used as power storage units, and compared with mobile power for the mobile phones, the vehicle starting power supply has a large capacity and is convenient and quick to use. On the other hand, people have also developed some small vacuum cleaners for the vehicle, which greatly facilitates vehicle owners to clean up debris in a carriage by themselves.

Although emergence of emergency starting power, car vacuum cleaner and other tools for the vehicle owners to provide convenience. Since each tool has only one function, it is necessary to purchase multiple tools separately, so that not only the acquisition cost is high, but also it is not favorable for storage, which affects the use experience.

### SUMMARY

The present disclosure aims to provide a dust collection equipment with a starting power supply to address problems that in existing technologies starting power supply or vacuum cleaner has a single function and in inconvenient to use.

To achieve above objectives, the present disclosure adopts following technical solutions. In some embodiments of the present disclosure, a dust collection equipment with a starting power supply is provided, including a housing, fixedly provided with a negative pressure module therein; a dust cover threaded on one end of the housing, herein an input end of the negative pressure module is connected to the dust cover, the one end of the housing is detachable provided with a dust collection cylinder and the dust cover extends into the dust collection cylinder, and one end of the dust collection cylinder where away from the housing is provided with a nozzle; and a battery housing detachable provided on the housing. Herein the battery housing has a battery pack fixedly provided therein, the battery pack is electrically connected to the negative pressure module, one end of the battery housing is opened with a connection compartment, and the connection compartment is fixedly provided with an interface electrically connected to the battery pack.

To reduce dust to entering the connection compartment, preferably, the connection compartment has a lid inserted therein, and a plug hole is provided on an inner top of the connection compartment. The lid is fixedly provided with a post, and the post is snap-fit connected to the plug hole.

To facilitate startup of the battery pack, preferably, the battery housing is fixedly provided with a second button.

To facilitate assembly and disassembly of the dust collection cylinder, preferably, one end of the housing is opened with a connecting groove, and the connecting groove is provided with a curved groove on an inner wall thereon, the curved groove is symmetrically provided with two sets. An outer wall of the other end of the dust collection cylinder is fixedly provided with a curved block, and the curved block is connected with the curved groove by snap-fit.

Preferably, one end of the dust collection cylinder is provided with a dust collection slot, the nozzle is fixedly provided with a baffle at one end thereon, the baffle is fixedly provided with a connecting cylinder, and the connecting cylinder is inserted in the dust collection slot.

Preferably, the baffle is fixedly provided with a sealing gasket on an end face near the connecting cylinder, and one end face of the sealing gasket where away from the baffle is against an end face of the dust collection slot.

Preferably, the housing is fixedly provided with a connecting base, the connecting base is fixedly provided with a connecting post, the connecting post is fixedly provided with a fixture block, the other end of the battery housing is opened with a mounting groove, the connecting post is slidably connected into the mounting slot, and an inner wall of the mounting groove is opened with a slot for snap-fit connection with the fixture block.

Preferably, the connecting post is rotatably provided with a plug and the plug is electrically connected to the negative pressure module, a bottom of the mounting groove is fixedly provided with a socket electrically connected to the battery pack, and the plug is connected to the socket in a plug-and-socket mode.

Compared to the existing technologies, the dust collection equipment with a starting power supply of the present disclosure has at least following beneficial effects and advantages.
1. The dust collection equipment with a starting power supply of the present disclosure, by fixedly setting the negative pressure module in the housing, setting the battery housing on the housing, and also setting the battery pack in the battery housing, then combining the battery pack and the negative pressure module for use, on the one hand, it has functions of vacuum cleaner and emergency power supply at the same time, which can reduce purchase of a variety of tools, so as to reduce the acquisition cost, and easy to store, thereby improving usage experience. On the other hand, the battery pack can be powered by the negative pressure module, to reduce an interference of power cord when vacuuming, thereby improving vacuuming effect.
2. The dust collection equipment with a starting power supply of the present disclosure, by providing the connection compartment on the battery housing, fixedly setting the interface in the connection compartment, and also rotatably setting the lid on the connection compartment, it is possible to reduce the entry of dust into the connection compartment, and to prevent dust from clogging the interface and preventing it from being used normally.

Other parts not involved of the dust collection equipment with a starting power supply of the present disclosure are the same as the existing technologies or can be realized by using the existing technologies. By fixedly setting the negative pressure module in the housing, and setting the battery pack in the battery housing, then combining the battery pack and the negative pressure module for use, it has functions of vacuum cleaner and emergency power supply at the same time, which can reduce purchase of a variety of tools, the acquisition cost is thus reduced. And it is also easy to store, thereby improving usage experience.

### BRIEF DESCRIPTION OF THE DRAWINGS

FIG. 1 shows a structural schematic diagram of a dust collection equipment with a starting power supply in accordance with some embodiments of the present disclosure.
FIG. 2 shows another structural schematic diagram of the dust collection equipment with a starting power supply in accordance with some embodiments of the present disclosure.
FIG. 3 shows a structural schematic diagram of a dust collection cylinder of the dust collection equipment with a starting power supply in accordance with some embodiments of the present disclosure.
FIG. 4 shows a structural schematic diagram of a connecting post of the dust collection equipment with a starting power supply in accordance with some embodiments of the present disclosure.
FIG. 5 shows a structural schematic diagram of a mounting groove of the dust collection equipment with a starting power supply in accordance with some embodiments of the present disclosure.

In the drawings, reference signs are as follows. 1. Housing, 101. Connecting base, 102. Exhaust hood, 103. Connecting groove, 104. First button, 105. Connecting post, 106. Fixture block, 107. Plug, 2. Dust collection cylinder, 201. Dust collection slot, 202. Curved block, 203. Dust cover, 3. Nozzle, 301. Connecting cylinder, 302. Baffle, 4. Battery housing, 401. Mounting groove, 402. Connection compartment, 403. Interface, 404. Second button, 405. Plug hole, 406. Slot, 5. Lid, 501. Post.

### DETAILED DESCRIPTION OF THE EMBODIMENTS

The technical solutions in embodiments of the present disclosure will be clearly and completely described below in conjunction with accompanying drawings in the embodiments of the present disclosure. Obviously, described embodiments are only a part of the embodiments of the present disclosure and not all of the embodiments of the present disclosure.

In the description of the present disclosure, it should be understood that terms "up", "down", "front", "back", "left", "right", "top", "bottom", "inside", "outside", and the like indicating orientation or positional relationships are based on those shown in the accompanying drawings, and are intended only for the purpose of facilitating the description of the present disclosure and simplifying the description, and are not intended to indicate or imply that a device or an element referred to must have a particular orientation, be constructed and operated in a particular orientation, and therefore is not to be construed as a limitation of the present invention.

### Embodiments

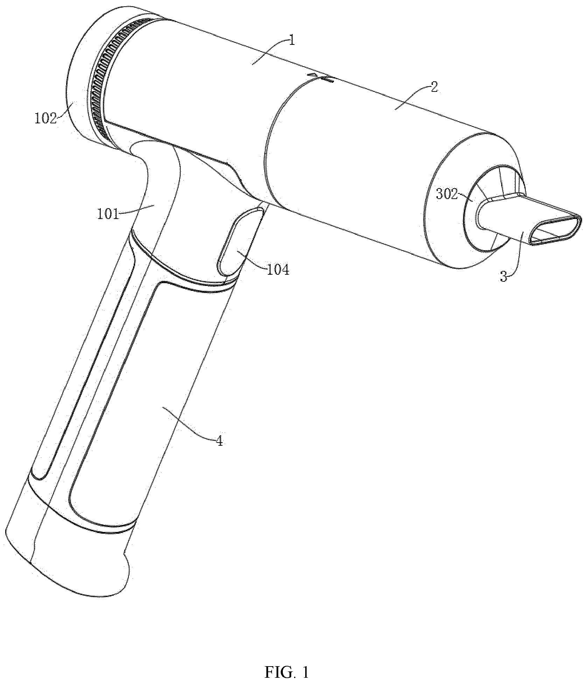

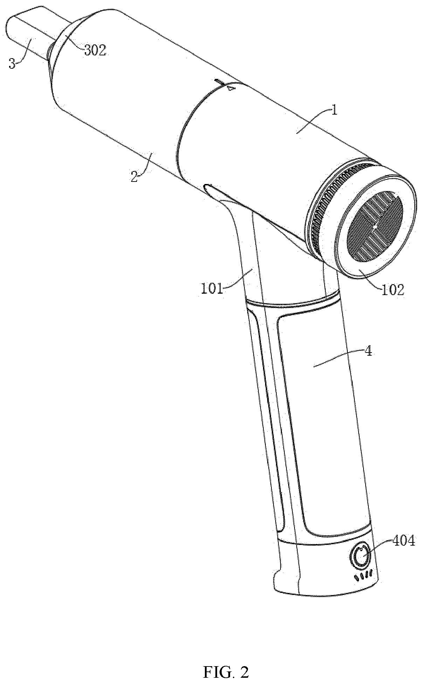

Referring to FIG. 1 to FIG. 4, in some embodiments of the present disclosure, a dust collection equipment with a starting power supply is provided, including a housing 1, and the housing 1 is fixedly provided with a negative pressure module. The dust collection equipment with a starting power supply further includes a dust cover 203 threaded on one end of the housing 1. Herein an exhaust hood 102 is threaded on the other end of the housing 1, an input end of the negative pressure module is connected to the dust cover 203, and an output end of the negative pressure module is connected to the exhaust hood 102. When in use, by starting the negative pressure module, air is extracted from the outside through the dust cover 203, and during extracting the air, garbage in a car is sucked into the dust collection cylinder 2 via a nozzle 3, and then the air is discharged from the housing 1 through the exhaust hood 102, which can facilitate vacuuming. The one end of the housing is detachable provided with a dust collection cylinder 2, and the dust cover 203 extends into the dust collection cylinder 2, this can intercept the garbage in the dust collection cylinder 2. And one end of the dust collection cylinder 2 where away from the housing 1 is provided with the nozzle 3, it is convenient for vacuuming operation. Moreover, the housing 1 is fixedly provided with a first button 104, by pressing the first button 104, which can start the negative pressure module and then through the nozzle 3 for vacuuming operation, it is easy to use. The housing 1 is detachable provided with a battery housing 4. Herein the battery housing 4 has a battery pack fixedly provided therein, the battery pack may be rechargeable batteries. The battery pack is electrically connected to the negative pressure module, one end of the battery housing 4 is opened with a connection compartment 402, and the connection compartment 402 is fixedly provided with an interface 403 electrically connected to the battery pack. The interface 403 includes a power port, a USB port, and a charging port for charging the battery pack. The battery housing 4 is fixedly provided with a second button 404, and by pressing the second button 404, the battery pack can be activated, which facilitates the battery pack to supply power to the negative pressure module or the interface 403, thereby improving the safety of use. When in use, by setting the battery housing 4 on the housing 1, and fixedly setting the battery pack in the battery housing 4, which not only supply power to the negative pressure module, but also can be used as emergency starting power supply to improve ranges of use. In addition, the housing 1 and the battery housing 4 form a pistol-like structure, which is easy to use.

When in use, by fixedly setting the negative pressure module in the housing 1, setting the battery housing 4 on the housing 1, fixedly setting the battery pack inside the battery housing 4, and by using the battery pack in combination with the negative pressure module, on the one hand, it has functions of vacuum cleaner and emergency power supply at the same time, which can reduce the acquisition of a variety of tools and also the acquisition cost, thus it is easy to store, and thereby improve usage experience. On the other hand, the battery pack can supply power to the negative pressure module, thereby reducing the interference of the power wire when vacuuming, and also improving the vacuuming effect. By providing the connection compartment 402 on the battery housing 4, fixedly providing the interface 403 in the connection compartment 402, and inserting the lid 5 on the connection compartment 402, which can reduce the entry of dust into the connection compartment 402, and prevent the dust from clogging the interface 403, resulting in an inability of normal use.

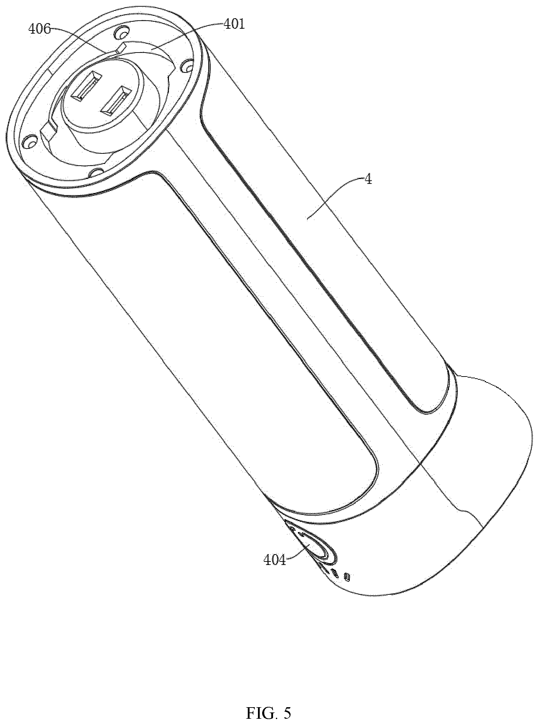

Referring to FIG. 5, the connection compartment 402 has a lid 5 inserted therein, and a plug hole 405 is provided on an inner top of the connection compartment 402. The lid 5 is fixedly provided with a post 501, and the post 501 is snap-fit connected to the plug hole 405. When in use, by installing the lid 5 in the connection compartment 402 and plugging the post 501 into the plug hole 405, the lid 5 can be fixed within the connection compartment 402, which can prevent foreign objects from being inserted into the interface 403 or dust from entering into the connection compartment 402, thereby affecting usage effect. Moreover, by fixedly providing a plug that plugs into the interface 403 on the lid 5, the dustproof effect can be further improved.

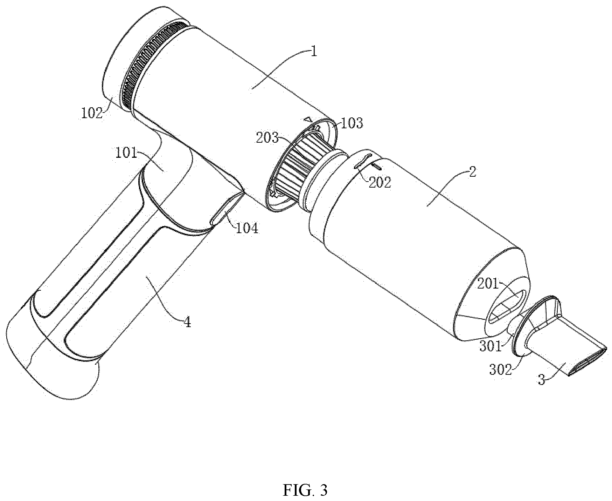

Referring to FIG. 3, one end of the housing 1 is opened with a connecting groove 103, and the dust cover 203 is located in the connecting groove 103. The connecting groove 103 is provided with a curved groove on an inner wall thereon, and the curved groove is symmetrically provided with two sets. An outer wall of the other end of the dust collection cylinder 2 is fixedly provided with a curved block 202, the curved block 202 is also symmetrically provided with two sets, and two sets of the curved block 202 each is connected with respective curved groove by snap-fit. When in use, by inserting the other end of the dust collection cylinder 2 into the connecting groove 102, and then rotating the dust collection cylinder 2 by a certain angle, preferably 90°, the curved block 202 can be made to slide into the connecting groove 103, thereby realizing fixation of the dust collection cylinder 2 on the housing 1. Moreover, by fixedly setting a sealing ring on the outer wall of the dust collection cylinder 2, the sealing ring is against the inner wall of the connecting groove 103, a sealing effect between the dust collection cylinder 2 and the housing can be improved, which in turn improves the vacuuming effect.

Referring to FIG. 3, one end of the dust collection cylinder 2 is provided with a dust collection slot 201, the nozzle 3 is fixedly provided with a baffle 302 at one end thereon, the baffle 302 is fixedly provided with a connecting cylinder 301, and the connecting cylinder 301 is inserted in the dust collection slot 201. When in use, by inserting the connecting cylinder 301 into the dust collection slot 201, it is realized that the nozzle 3 is fixed on the dust collection cylinder 2, which is easy to assembly and disassembly, and different nozzle 3 can be replaced according to actual use situation, thereby improving the vacuuming effect.

Referring to FIG. 3, the baffle 302 is fixedly provided with a sealing gasket on an end face near the connecting cylinder 301, and one end face of the sealing gasket where away from the baffle 302 is against an end face of the dust collection slot 201. When in use, by fixedly setting the sealing gasket on the baffle 302, the sealing effect between the connecting cylinder 301 and the dust collection slot 201 can be improved, and air leakage also can be reduced, thereby improving dust removal ability.

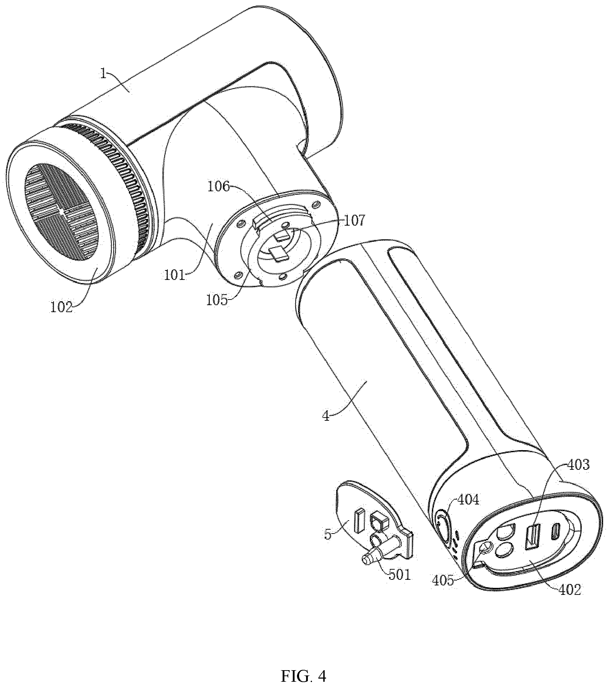

Referring to FIG. 4, the housing 1 is fixedly provided with a connecting base 101, the connecting base 101 is fixedly provided with a connecting post 105, and the connecting post 105 is fixedly provided with a fixture block 106. And the other end of the battery housing 4 is opened with a mounting groove 401, the connecting post 105 is slidably connected into the mounting slot 401, and an inner wall of the mounting groove 401 is opened with a slot 406 for snap-fit connection with the fixture block 106. When in use, by inserting the connecting post 105 into the mounting groove 401, and then rotating the battery housing 4 by 90°, the fixture block 106 can be slid into the slot 406, thereby improving fixation of the battery housing 4 on the connecting base 101, which is easy to assembly and disassembly, and also easy to be carried as a whole, thereby improving the usage effect.

Referring to FIG. 4, the connecting post 105 is rotatably provided with a plug 107, and the plug 107 is sleeved with a torsional spring to bring the plug 107 be rotated by a certain angle, preferably 90°. The plug 107 has an initial state, it is described as follows. When the connecting post 105 is inserted into the mounting groove 401, the plug 107 is just plugged with the socket. When driving the battery housing to rotate 90°, the socket can carry with the plug 107 to follow the rotation of the battery housing 4. And when the battery housing 4 is removed from the connecting base 101, the plug 107 is reset under the action of the torsional spring. The plug 107 is electrically connected to the negative pressure module, and the socket electrically connected to the battery pack is fixed at the bottom of the mounting groove 401. Then the plug 107 is plugged with the socket to realize an electrical connection, which facilitates the battery pack can supply power to the negative pressure module, and ensure the negative pressure module can start the vacuuming operation, thereby helps to improve the vacuuming effect.

The foregoing description is only some better specific implementations of the present disclosure, but the scope of protection of the present disclosure is not limited thereto, any skilled person in the art familiar with the technical field within the technical scope of the present disclosure, by making equivalent substitutions or changes in accordance with the technical solution and concept of the present disclosure, shall be covered by the scope of protection of the present invention.

## Claims

1. A dust collection equipment with a starting power supply, comprising
a housing (1), fixedly provided with a negative pressure module therein;
**characterized in that**, further comprises a dust cover (203) threaded on one end of the housing (1), wherein an input end of the negative pressure module is connected to the dust cover (203), the one end of the housing (1) is detachable provided with a dust collection cylinder (2), the dust cover (203) extends into the dust collection cylinder (2), and one end of the dust collection cylinder (2) where away from the housing (1) is provided with a nozzle (3); and
a battery housing (4) detachable provided on the housing (1);
wherein the battery housing (4) has a battery pack fixedly provided therein, the battery pack is electrically connected to the negative pressure module, one end of the battery housing (4) is opened with a connection compartment (402), and the connection compartment (402) is fixedly provided with an interface (403) electrically connected to the battery pack.

2. The dust collection equipment with a starting power supply according to claim 1, **characterized in that**, the connection compartment (402) has a lid (5) inserted therein, and a plug hole (405) is provided on an inner top of the connection compartment (402); the lid (5) is fixedly provided with a post (501), and the post (501) is snap-fit connected to the plug hole (405).

3. The dust collection equipment with a starting power supply according to claim 1, **characterized in that**, the battery housing (4) is fixedly provided with a second button (404).

4. The dust collection equipment with a starting power supply according to claim 1, **characterized in that**, one end of the housing (1) is opened with a connecting groove (103), and the connecting groove (103) is provided with a curved groove on an inner wall thereon, the curved groove is symmetrically provided with two sets, an outer wall of the other end of the dust collection cylinder (2) is fixedly provided with a curved block (202), and the curved block (202) is connected with the curved groove by snap-fit.

5. The dust collection equipment with a starting power supply according to claim 1, **characterized in that**, one end of the dust collection cylinder (2) is provided with a dust collection slot (201), the nozzle (3) is fixedly provided with a baffle (302) at one end thereon, the baffle (302) is fixedly provided with a connecting cylinder (301), and the connecting cylinder (301) is inserted in the dust collection slot (201).

6. The dust collection equipment with a starting power supply according to claim 5, **characterized in that**, the baffle (302) is fixedly provided with a sealing gasket on an end face near the connecting cylinder (301), and one end face of the sealing gasket where away from the baffle (302) is against an end face of the dust collection slot (201).

7. The dust collection equipment with a starting power supply according to claim 1, **characterized in that**, the housing (1) is fixedly provided with a connecting base (101), the connecting base (101) is fixedly provided with a connecting post (105), the connecting post (105) is fixedly provided with a fixture block (106), the other end of the battery housing (4) is opened with a mounting groove (401), the connecting post (105) is slidably connected into the mounting slot (401), and an inner wall of the mounting groove (401) is opened with a slot (406) for snap-fit connection with the fixture block (106).

8. The dust collection equipment with a starting power supply according to claim 7, **characterized in that**, the connecting post (105) is rotatably provided with a plug (107) and the plug (107) is electrically connected to the negative pressure module, a bottom of the mounting groove (401) is fixedly provided with a socket electrically connected to the battery pack, and the plug (107) is connected to the socket in a plug-and-socket mode.
